Europäisches Patentamt

European Patent Office

Office européen des brevets

(11) Publication number: **0 412 728 A2**

## EUROPEAN PATENT APPLICATION

(21) Application number: 90308537.1

(51) Int. Cl.5: **G01B 11/06**

(22) Date of filing: 02.08.90

(30) Priority: **11.08.89 US 393337**

(43) Date of publication of application:
**13.02.91 Bulletin 91/07**

(84) Designated Contracting States:
**DE ES FR GB IT**

(71) Applicant: **AMERICAN TELEPHONE AND TELEGRAPH COMPANY**
**550 Madison Avenue**
**New York, NY 10022(US)**

(72) Inventor: **Heimann, Peter Aaron**
**16 Starmond Avenue**
**Clifton, New Jersey 07013(US)**
Inventor: **Hills, Graham William**
**100 Vasona Oaks Drive**
**Los Gatos, California 95030(US)**

(74) Representative: **Johnston, Kenneth Graham et al**
**AT&T (UK) LTD. AT&T Intellectual Property Division 5 Mornington Road**
**Woodford Green Essex, IG8 OTU(GB)**

(54) Interferometric method and apparatus for controlling film thickness.

(57) A method and apparatus for determining the thickness of a layer deposited during semiconductor manufacture is disclosed. Two discrete light wavelengths are shone upon the layer to be measured. If the layer is being formed by deposition or etching, a series of maxima and minima will be observed in the light reflected from the layer. Coincidence of two maxima or minima provides an accurate determination of the thickness of the layer.

EP 0 412 728 A2

# INTERFEROMETRIC METHOD AND APPARATUS FOR CONTROLLING FILM THICKNESS

## Technical Field

This invention relates to methods and apparatus for manufacturing semiconductor integrated circuits and more particularly to methods and apparatus for measuring and controlling the thickness of various films or layers formed during the manufacture of such circuits.

## Background of the Invention

During the process of integrated circuit manufacture, it is often customary to cover a partially fabricated circuit with a layer of material which may typically be a dielectric. It is generally desirable that the thickness of the covering material be accurately controlled (and therefore accurately measured).

For example, in a typical process for fabricating a silicon integrated circuit, a layer of silicon dioxide is deposited on top of a metallization pattern. Since it is desirable to obtain smooth dielectric coverage over the metal pattern, the silicon dioxide layer is deposited in a layer that is thicker than the final desired thickness. Then the deposited layer is etched back to the final desired thickness. The final etched-back silicon dioxide layer generally exhibits smoother contours than a layer formed without etchback. Next other processing steps are performed to complete fabrication of the integrated circuit.

It is desirable that the thickness of the final silicon dioxide layer be accurately known. Interferometric techniques and apparatus are sometimes used to measure (and monitor) the thickness of various material layers. In a typical interferometric application, a light source is shone through a material layer (for example silicon dioxide) whose thickness is to be measured. Assuming that the material is at least partially transparent to the light employed, an interference condition occurs between light reflected from the top surface of the material and light reflected from the bottom surface of the material. A detector may be employed to monitor the intensity of the interfering light. Should the thickness of the material under observation be an integral number of half wavelengths of the light employed (adjusted by the index of refraction of the material) a maximum intensity will be observed at the detector. The maximum intensity is due to constructive interference between the light reflected from the top surface of the material and the light reflected from the bottom surface of the material. (Minima may be observed when the thickness of the material is an odd integral number of 1/4 wavelengths adjusted by the index of refraction.)

Thus, when a maximum intensity is observed at the detector, the thickness of the material is given by the equation:

$$t = \frac{m\lambda}{2n} \quad 1)$$

where

t = thickness of material

$\lambda$ = wavelength of incident light

n = index of refraction at wavelength $\lambda$

m = an integer

Consequently, interferometric techniques have proven useful for *in situ* monitoring of the etching or deposition of various material layers, including silicon dioxide. For example, if a layer of silicon dioxide is deposited to a predetermined thickness and is subsequently etched back, a succession of maxima and minima will be observed at the detector as the material layer increases in thickness during deposition and then decreases during the etchback. Thus, the thickness of the material layer may be determined by counting maxima and minima observed by the detector (and by timed interpolation if necessary). On other occasions, the deposition may not be monitored, but only the etch-back procedure may be monitored. If only the etch-back procedure is monitored, it is necessary to know accurately the initial thickness of the material layer so that the material may be etched back to a desired final thickness.

## Summary of the Invention

The present invention solves the problem posed by inaccurate knowledge of the starting thickness of the material layer. The present invention provides light with at least two different wavelengths (emitted from one or more sources), and a separate detector for each wavelength. Each detector separately yields a series of maxima and minima during etch or deposition processes. Comparison and coordination of the observations of maxima or minima from the two detectors provides an accurate determination of the thickness of the material layer under observation.

## Brief Description of the Drawing

FIG. 1 is a cross sectional view schematically depicting the thickness measurement of a material layer by interferometric techniques;

FIG. 2 is a graph depicting the intensity of light observed during interferometric measurements (such as shown in FIG. 1) as a function of time or thickness of the material layer;

FIGS. 3 and 4 are diagrams depicting illustrative embodiments of the present invention; and

FIG. 5 is a graph depicting the intensity of light observed during illustrative measurements made by the present invention.

## Detailed Description

This invention includes a method and apparatus for fabricating devices, the method including the steps of monitoring the etching or measuring the thickness of a material layer. The invention also includes the apparatus used to perform the inventive method.

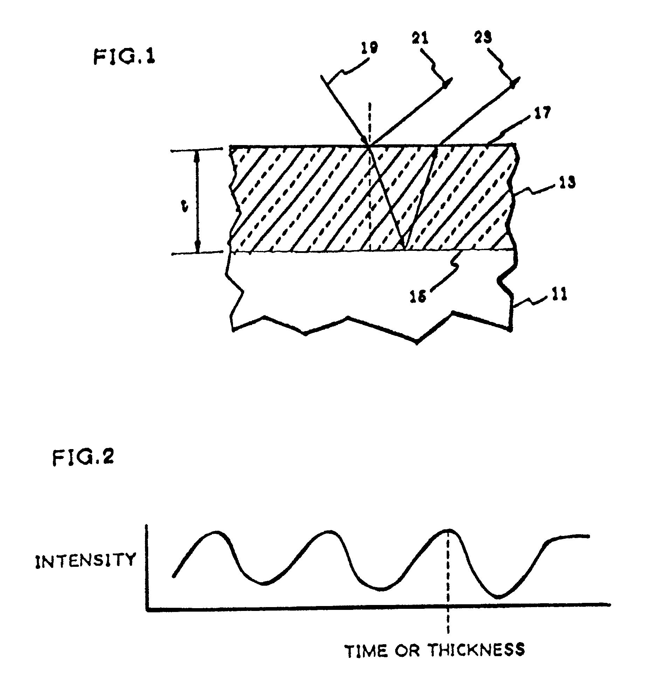

In FIG. 1, the principle of basic interferometric technique is illustrated. Reference numeral 11 denotes a material layer which may, for example, be silicon, a silicon compound, e.g. silicon dioxide, doped silicon dioxide, silicon nitride, or a metal, e.g. aluminum, tungsten, etc. Other material layers are also possible.

Reference numeral 13 denotes a material layer which is transparent to a beam of radiation 19. Layer 13 might, for example, be silicon dioxide, an oxide of silicon formed by deposition from an organometallic precursor, silicon nimde, silicon oxynitride, a photoresist material, a planarizing resist material, or polysilicon. Other materials are also possible. However, it is important that material layer 13 be at least partially transparent to light beam 19, i.e. the wavelength of light beam 19 is chosen so that it is at least partially transmitted by layer 13.

Because layer 13 is at least partially transparent to incident beam 19, a portion of beam 19 travels through layer 13 and is then reflected upward from interface 15 between layers 13 and 11; the beam finally emerges from layer 13 as beam 23. A portion of incident beam 19 is also reflected from upper surface 17 as beam 21. Should the thickness, $t$ , of layer 13 be an integral number of half wavelengths of the incident light (divided by the index of refraction of layer 13 at the wavelength of the incident light) constructive interference between emergent beams 21 and 23 will be observed. The constructive interference will be manifested as a maximal intensity in the light formed by a combination of beams 21 and 23.

If the thickness, $t$ , of layer 13 is changing, i.e. if the thickness of layer 13 is being increased by deposition, or if the thickness of layer 13 is being decreased by etching, a graph of the observed intensity as a function of time will have the general shape of that shown in FIG. 2. Thus, whenever a maximum intensity is observed, the thickness, $t$ , of layer 13 may be determined to be equal to one half of the incident light wavelength (divided by the index of refraction) multiplied by an integer.

A detailed discussion of the calculation techniques appropriate for determining the thickness of a layer such as layer 13 is provided by R. Reizman and W. van Gelder, "Optical Thickness Measurement of SiO$_2$ - Si$_3$N$_4$ Films on Silicon, Solid State Electronics, Vol 10, p. 625-632(1967).

Unfortunately, the value of the integer multiplier mentioned above cannot always be accurately determined. Consequently, the interferometric technique described may not be very accurate in certain circumstances. For example, in one conventional semiconductor process, a layer of silicon oxide is deposited over metal rvnners. Because of variations in processing conditions, the resulting wafer-to-wafer thickness of the initial silicon oxide may be 25,000 Å ± 2000 Å. (Such process conditions are not atypical in a CVD 5000 chemical vapor deposition system using multiple-deposition chambers manufactured by Applied Materials Inc.) Process specifications dictate that the silicon oxide next be etched back to a final thickness of 8,000 Å. However, the uncertainty in the nominal 25,000Å value means that, although the thickness of the removed silicon oxide may be fairly accurately determined (by counting minima and maxima as the etching proceeds) the thickness of the remaining silicon oxide cannot be accurately determined.

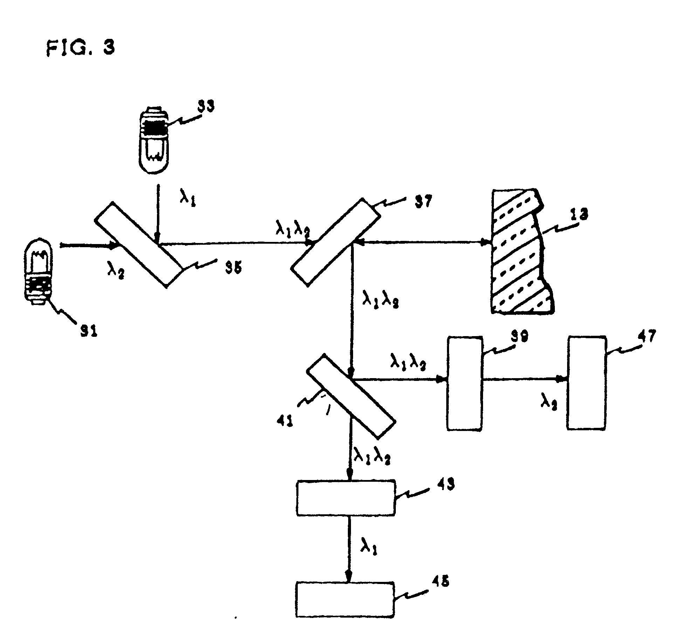

The present invention provides a solution to the above dilemma in many cases of practical interest. One illustrative embodiment is featured in FIG. 3. Reference numerals 31 and 33 denote two separate monochromatic light sources, which may be, for example, lasers or monochromatic lamps. The wavelength of the light emerging from source 31 will be designated $\lambda_2$; the wavelength of the light emerging from

3

source 33 will be designated $\lambda_1$. (Alternatively as will be illustrated later, a single light source emitting two separate fairly monochromatic frequencies could be used). Some specific examples for light sources 31 and 33 together with appropriate frequencies will be provided later. Reference numeral 35 denotes a partially-reflective mirror. The purpose of the item denoted by reference numeral 35 is to transmit the light from light source 31 towards substrate 13 and also to reflect the light from light source 33 towards substrate 13.

Reference numeral 37 denotes a partially reflective mirror which transmits a portion of the combined light from sources 31 and 33 towards material layer 13. Light which is reflected back from material layer 13 and from whatever underlies material layer 13 (as illustrated in FIG. 1) is reflected by mirror 37 toward a second partially reflective mirror 41.

Mirror 41 splits the incident light beam into two beams, one beam going to band pass filter 39 and the other beam going to band pass filter 43. Band pass filter 39 preferentially transmits light with wavelength which originated from light source 31. Band pass filter 43 preferentially transmits lights with wavelength $\lambda_1$ which originated from light source 33.

Alternatively radiation from 31 and 33 could be modulated at frequencies $f_2$ and $f_1$, respectively. The combinations of components (39 + 47) and (43 + 45) may be (i.e., responsive to modulation) phase sensitive detection schemes for frequencies $f_2$ and $f_1$, respectively, such as a detector and lock in amplifier. By this means electronic discrimination of the two radiation wavelengths can be obtained.

The outputs from filters 39 and 43 are connected to detectors 47 and 45 respectively. During a typical etch-back procedure, the light intensity measured at detectors 47 and 45 may be represented by the graphs in FIG. 5. It will be noted in FIG. 5 that at a particular thickness, $t_1$, of layer 13, that maxima of the intensity curves for detectors 47 and 45 are nearly coincident. This coincidence can be expressed mathematically as:

$$t_1 \approx \frac{m_1 \lambda_1}{2n_1} \approx \frac{m_2 \lambda_2}{2n_2} \quad 2)$$

where

$t_1$ = thickness of material layer

$m_1, m_2$ = integers

$\lambda_1, \lambda_2$ = light wavelengths

$n_1, n_2$ = index of refraction at $\lambda_1, \lambda_2$ respectively

Equation 2) above is a mathematical expression of the previously-stated principle that when a maximum intensity is observed, the thickness of layer 13 must be equal to one half the wavelength of the incident light (divided by the index of refraction) multiplied by an integer. In equation 2) above, $m_1$ and $m_2$ are unknown integers, making the solution somewhat problematic. However, in circumstances of practical interest, equation 2) may be solved to yield accurate results for the thickness $t_1$ of layer 13.

The following example, based upon typical silicon oxide thicknesses mentioned above for material layer 13 will aid in understanding the invention.

## EXAMPLE:

Suppose, as mentioned before, that it is desired to deposit a silicon oxide layer over a substrate or over metal runners and then to etch-back the silicon oxide layer. Because of variations in processing conditions, the wafer-to-wafer thickness of the as-deposited silicon oxide may be 25,000 Å ± 2,000 Å. It is desired to etch the silicon dioxide layer back to 8,000 Å.

The apparatus illustrated in FIG. 3 may be employed to shine two discrete frequencies of light upon layer 13 as it is undergoing etching. Light source 33 may be a diode providing light at a frequency of $\lambda_1$ = 7800 Å and light source 31 may be a helium-neon laser providing light at a frequency of $\lambda_2$ = 6330 Å. (Alternatively as will be shown later, a single laser operating at both frequencies may be substituted for light sources 33 and 31 and mirror 35 in FIG. 3).

As the etch-back process proceeds, detectors 45 and 47 will exhibit roughly sinusoidal variations in intensity, similar to what is shown in FIG. 5. However, at some point in time, when the thickness of layer 13 has been reduced to nearly 10,500 Å, simultaneous maxima will be observed at detectors 45 and 47. The observance of simultaneous maxima corresponds to thickness $t_1$ in FIG. 5. Assuming that the index of refraction of the silicon oxide is approximately 1.5 for both wavelengths, the occurrence of simultaneous maxima may be mathematically described by substitution into equation 2), viz:

with: $m_1 = 4$

$m_2 = 5$

$\lambda_1 = 7800$ Å

$\lambda_2 = 6330$ Å

$n_1 = n_2 = 1.5$

$$t_1 \approx \frac{4 \times 7800 \overset{o}{A}}{2 \times 1.5} \approx \frac{5 \times 6330 \overset{o}{A}}{2 \times 1.5} \approx 10,500 \overset{o}{A} \quad 3)$$

Another overlap of maxima will also occur at approximately 21,000 Å. However, the occurrence of these two overlaps can be easily distinguished by the amount of time required for the etching process to occur.

After the etching has proceeded to the 10,500 Å reference point determined above, further accurate monitoring of the etching is easily accomplished. Either or both of the intensity curves may be individually monitored and the etching process stopped when an appropriate minimum or maximum has been observed or the etching process may be stopped between a minimum or maximum by timed interpolation.

Thus, the apparatus has provided an accurate way of determining a reference point within the etching process by which the thickness of the silicon oxide layer is accurately known. Further etching may be easily and accurately monitored after the reference has been determined.

A variety of other choices may be made for wavelengths $\lambda_1$ and $\lambda_2$. For example, an argon laser may be tuned to produce wavelengths at approximately 5145 Å, 4965 Å, 4880 Å, 4765 Å, 4545 Å and 3511 Å, among others. If an index of refraction of approximately 1.5 is assumed for material layer 13, the following solutions to equation 2) may be obtained:

$$t_1 \approx \frac{2 \times 5145 \overset{o}{A}}{2 \times 1.5} \approx \frac{3 \times 3511 \overset{o}{A}}{2 \times 1.5} \approx 3430 \overset{o}{A} \quad 4)$$

or

$$t_1 \approx \frac{7 \times 4880 \overset{o}{A}}{2 \times 1.5} \approx \frac{10 \times 3511 \overset{o}{A}}{2 \times 1.5} \approx 11700 \overset{o}{A} \quad 5)$$

or

$$t_1 \approx \frac{7 \times 4545}{2 \times 1.5} \approx \frac{9 \times 3511 \overset{o}{A}}{2 \times 1.5} \approx 10600 \overset{o}{A} \quad 6)$$

Thus, one might replace light sources 31 and 33 together with mirror 35 with a single argon laser tuned to emit $\lambda_1 = 5145$ Å and $= \lambda_2$ 3511 Å. Alternatively, one might a laser tuned to emit $\lambda_1 = 4880$ Å and $\lambda_2 = 3511$ Å. Or, one might choose $\lambda_1 = 4595$ and $\lambda_2 = 3511$ Å.

Other light sources may also be utilized. For example, a mercury lamp might be substituted for light sources 33,31 and mirror 35. The mercury lamp may be filtered to produce two discrete wavelengths at $\lambda_1 = 5461$ Å and $\lambda_2 = 4358$ Å. Coincidence of maxima for the mercury lamp case (assuming an index of refraction of 1.47) occur at approximately 7400 Å.

Another example of a suitable light source is a helium- cadmium laser tuned to produce $\lambda_1 = 3250$ Å and $= 4416$ Å. Assuming an index of refraction of 1.5 for both wavelengths, equation 1) may be solved to provide:

$$t_1 \approx \frac{4 \times 3250 \overset{o}{A}}{2 \times 1.5} \approx \frac{3 \times 4416 \overset{o}{A}}{2 \times 1.5} \approx 4,300 \overset{o}{A} \quad 7)$$

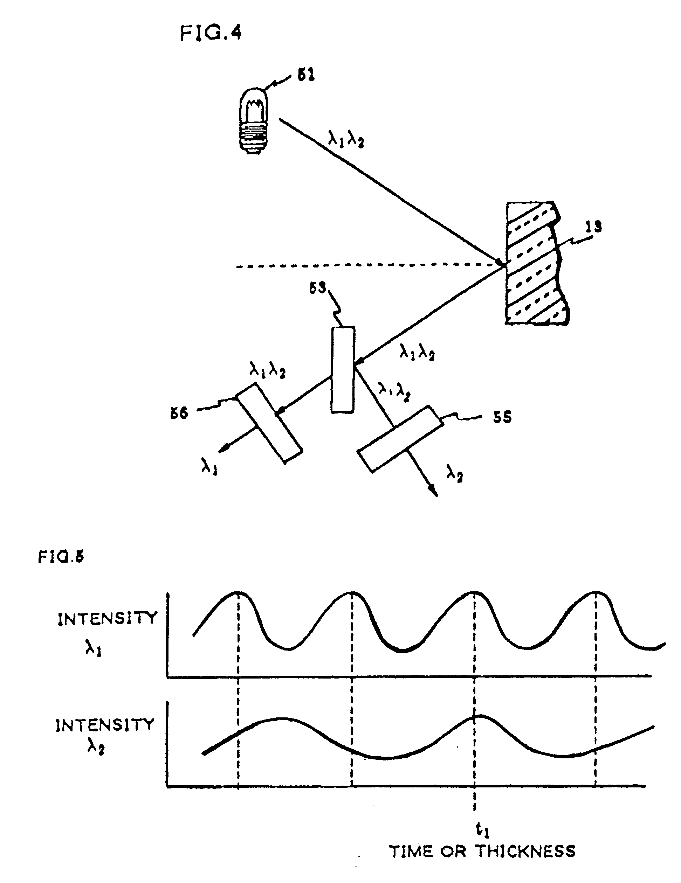

FIG. 4 illustrates how a single light source may be implemented. Reference numeral 51 designates a single light source capable of radiating at at least two different wavelengths. Reference numeral 53 is a partially reflective mirror capable of splitting the beam coming from layer 13 into two separate beams. Reference numerals 56 and 55 are filters capable of separating $\lambda_1$ and $\lambda_2$ respectively. Detectors (not shown) may be positioned to receive the outputs of the filters.

The foregoing examples have illustrated the coincidence or overlap of maxima. However, the inventive method and apparatus may also be applied to the coincidence or overlap of minima or even the coincidence or overlap of a minimum and a maximum, if desired.

## Claims

**1.** A method for fabricating a device comprising the steps of:
forming a material layer;
illuminating said material layer with light;
detecting the intensity of said light reflected from said material layer to determine the thickness of said layer;
CHARACTERIZED IN THAT said light has two discrete wavelengths.

**2.** The method of claim 1 wherein said material layer is made from a material chosen from the group consisting of: silicon dioxide, silicon nitride, silicon oxynitride, photoresist, and planarizing resist.

**3.** The method of claim 1 in which said material layer has a first and second surface, and said material layer is being etched and further including the steps of detecting the separate intensities of each of said wavelengths of light reflected from said first and second surfaces, and determining when said intensities are simultaneously at respective predetermined values corresponding to a thickness of said material layer.

**4.** An apparatus for measuring the thickness of a material layer comprising:
means for shining light having at least two discrete wavelengths upon said material layer; and
means for detecting separately the intensity of each of said wavelengths of light reflected from said material layer.

**5.** The apparatus of claim 4 wherein said means for shining light includes:
two separate light sources, and a partially reflective mirror positioned with respect to said light sources to transmit the combined light from both said sources upon the same spot upon said material layer.

**6.** The apparatus of claim 4 wherein said means for shining light includes one light source emitting two discrete wavelengths.

**7.** The apparatus of claim 5 or 6 further including:
a partially reflective mirror positioned to split said light reflected from said material layer into first and second beams;
first and second filters, each positioned in the path of said corresponding first and second beams, said first filter passing one of said two discrete wavelengths, and said second filter passing the other of said two discrete wavelengths;
first and second detectors, positioned to receive output from said first and second filters, respectively.

**8.** The apparatus of claim 4 further including:
means for modulating said light and wherein said means for detecting the intensity of said light is responsive to said modulation.

FIG.1

FIG.2

INTENSITY

TIME OR THICKNESS

FIG. 3

# FIG.4

# FIG.5

INTENSITY $\lambda_1$

INTENSITY $\lambda_2$

$t_1$

TIME OR THICKNESS